# EUROPÄISCHE PATENTANMELDUNG

(11) **EP 0 566 960 A2**
(43) Veröffentlichungstag der Anmeldung: **27.10.1993**
(21) Anmeldenummer: 93105977.8
(22) Anmeldetag: 13.04.1993
(51) Int. Cl.: G21C 19/36

(54) **Zerkleinern und Verpacken von Brennelement-Kästen oder ähnlichen Kernreaktor-Strukturelementen**

(30) Priorität: 22.04.1992 DE 4213260
(71) Anmelder: SIEMENS AKTIENGESELLSCHAFT, D-80333 München (DE)
(72) Erfinder: Knaab, Heinz, Dipl.-Ing., W-8520 Erlangen (DE); Knecht, Klaus, Dipl.-Ing., W-8520 Erlangen (DE)

(57) **Zusammenfassung**

In einer Zerkleinerungsvorrichtung (7, 8, 9) aus Brennelement-Kästen (B) gebildeter Schrott (P) fällt in einen Transportbehälter (10), in dessen Längsachse ein Filter (4) angeordnet ist. Ein durch den Transportbehälter und das Filter geleiteter Flüssigkeitsstrom nimmt oberflächlich anhaftende radioaktive Fremdstoffe auf und sammelt sie im Filter. Der Transportbehälter mit dem zentralen Filter und dem darum gepackten Schrott wird in einen Endlagerbehälter eingesetzt, wobei die Strahlung der Fremdstoffe bereits teilweise vom Schrott abgeschirmt ist. Dadurch wird auch bei starker Strahlung der Fremdstoffe eine hohe Packungsdichte des Schrottes bei verhältnismäßig schwacher Abschirmung durch die Wände des Endlagerbehälters möglich.

## Beschreibung

Die Erfindung betrifft ein Verfahren zum Zerkleinern und Verpacken verbrauchter Strukturelemente von Kernreaktoren, insbesondere Brennelement-Kästen. Die Erfindung betrifft ferner eine Anlage zur Durchführung des Verfahrens, eine daran angepaßte Zerkleinerungsvorrichtung sowie einen entsprechenden, auswechselbaren Transportbehälter.

Brennelement-Kästen bestehen meist aus Zirkon oder Zirkonlegierungen, an denen sich während des Reaktorbetriebes Korrosionsprodukte und andere Fremdstoffe angelagert haben. Im reinen Zustand stellen diese Werkstoffe nach Neutronenbestrahlung Betastrahler dar; werden diese Stoffe etwa zwei Jahre im Wasserbecken des Kernreaktors zwischengelagert, so tritt nur noch eine verhältnismäßig schwache Betastrahlung auf, die leicht abzuschirmen ist. Korrosionsprodukte und andere Substanzen können jedoch Gammastrahler oder ähnliche, radioaktive Stoffe enthalten, deren Abschirmung bei der Entsorgung besondere Maßnahmen erfordern. Daher können verbrauchte Strukturteile, die für die Entlagerung zu Schrott verpreßt und zerkleinert werden, nicht beliebig kompakt in Endlagerbehälter verpackt und die Endlagerbehälter müssen entsprechend dicke Wände zur Abschirmung dieser Strahlung besitzen. Während des Zerkleinerungs- und Verpackungsvorgangs muß eine ausreichende Abschirmung der Strahlung gesichert sein.

Der Erfindung liegt die Aufgabe zugrunde, den Aufwand für die Entsorgung derartiger verbrauchter Strukturelemente zu verringern.

Die Erfindung geht dabei von dem Gedanken aus, beim Zerkleinern das schwach strahlende Metall von den stark strahlenden Fremdstoffen zu trennen, wobei die Fremdstoffe etwa im Zentrum der Endlagerbehälter gelagert und die schwach strahlenden Materialien um diese Fremdstoffe herum gepackt werden, so daß sie bereits als Abschirmung für die strahlenden Fremdstoffe wirken. Dadurch wird der Aufwand an benötigtem Abschirmmaterial im Endlager verringert und eine bessere Ausnutzung des Lagervolumens ermöglicht. So kann z.B. die gleiche Schrottmenge nunmehr in kleineren, dichter bepackten Endlagerbehältern gelagert werden. Werden genormte Außenmaße für die Endlagerbehälter vorgegeben, so können deren Abschirmwände dünner ausgeführt werden bzw. es kann bei genormter Wandstärke durch Erhöhung der Packungsdichte mehr Schrott verpackt werden.

Davon ausgehend, sieht die Erfindung zur Lösung der Aufgabe ein Verfahren mit den Merkmalen des Anspruchs 1 vor.

Demnach werden die Schrottelemente zu Schrott-Teilen zerkleinert, die in einem Transportbehälter gespült werden, wobei die abgespülten Fremdstoffteilchen im Inneren des Transportbehälters gesammelt werden. Insbesondere können z.B. die während des Zerkleinerns anfallenden Schrott-Teile kontinuierlich in einen ein Filter umgebenden Ringraum des Transportbehälters gefördert und von einem über das Filter abgesaugten Flüssigkeitsstrom gespült werden, bis der Ringraum praktisch mit Schrott-Teilen gefüllt ist. Die Schrott-Teile werden also um die gesammelten Brennstoffteile herum gepackt und der so bepackte Transportbehälter wird in einen verschließbaren Lagerbehälter eingesetzt. Vorteilhaft wird der Transportbehälter mit dem von Fremdstoffteilchen beladenen Filter und den Schrott-Teilen vor dem Einsetzen in den Endlagerbehälter getrocknet.

Kernreaktoren besitzen ein neben dem Einsatzort der Brennelemente angeordnetes, wassergefülltes Lagerbecken, in das die Brennelemente verfahren werden können, um an ihnen unter Wasser Reparaturen und Inspektionen durchführen zu können. Vorteilhaft wird das erfindungsgemäße Verfahren in diesem Wasserbecken des Kernreaktor unter Wasser vorgenommen, wobei die verkleinerten Schrott-Teile in den Transportbehälter fallen, um dort gespült zu werden. Das Wasser des Wasserbeckens dient dabei sowohl zur Abschirmung der Strahlung wie zum Spülen des Schrotts. Das über das Filter abgesaugte Wasser wird nach dem Spülen und Sammeln der Fremdstoff-Teilchen in das Wasserbecken zurückgeleitet, wobei es vorteilhaft zusätzlich über das ohnehin vorhandene Filter zum Reinigen des Beckenwassers geleitet wird, um auch dann, wenn das zentral im Transportbehälter angeordnete Filter überlastet ist, eine Verunreinigung des Bekkenwassers zu vermeiden.

Die Brennelementkästen bzw. Strukturteile werden dabei auf eine der gewünschten Packungsdichte des Behälters angepaßte mittlere Größe zerkleinert und der Transportbehälter kann beim Verpacken gerüttelt werden, um die gewünschte Packungsdichte sicherzustellen. Zum Trocknen wird der Transportbehälter vorzugsweise aus dem Wasserbecken heraus und unter eine Abschirmglocke gehoben. Um auch außerhalb des Wasserbeckens eine ausreichende Abschirmung zu erhalten, kann der Transportbehälter oben mit einem Transportdeckel abgedeckt und zusammen mit dem Transportdeckel in den Lagerbehälter eingesetzt werden.

Eine geeignete Anlage zur Durchführung dieses Verfahrens enthält eine Zerkleinerungsvorrichtung, einen unterhalb dieser Vorrichtung angeordneten, auswechselbaren Transportbehälter mit einem zentralen Filter und einem Anschluß an einem Flüssigkeitskreislauf. Ein Wagen ermöglicht, den Transportbehälter mit dem Filter seitlich gegenüber der Zerkleinerungsvorrichtung zu verschieben. Ferner ist eine Hubvorrichtung mit einer unten offenen Abschirmglocke und ein Transportmittel zum Transportieren des Transportbehälters mit dem Filter vorgesehen, um den Transportbehälter mit den um das Filter gepackten Schrott-Teilen in einen Endlagerbehälter einzusetzen.

Während eine entsprechende Hubvorrichtung und ein Transportmittel ohnehin zum Handhaben der Brennelemente bei Inspektionen und Reparaturen im Reaktor üblicherweise vorhanden ist, ist als zusätzliches Anlagenteil für das Verfahren vor allem die Zerkleinerungsvorrichtung mit dem Wagen zum Halten und Transportieren des Transportbehälters vorgesehen, deren vorteilhafte Ausbildung im Anspruch 14 wiedergegeben ist. Der Transportbehälter selbst kann vorteilhaft entsprechend Anspruch 17 ausgebildet sein und ist ein entsprechend der anfallenden Schrottmenge zur Verfügung zu stellender Austauschteil.

Vorteilhafte Weiterbildungen werden in den Unteransprüchen angegeben. Anhand von einem Ausführungsbeispiel und vier Figuren wird die Erfindung näher erläutert.

Es zeigen:
- Figur 1: einen erfindungsgemäßen Transportbehälter mit Filter,
- Figur 2: eine Zerkleinerungsvorrichtung gemäß der Erfindung,
- Figur 3: ein Transportmittel und
- Figur 4: einen Endlagerbehälter.

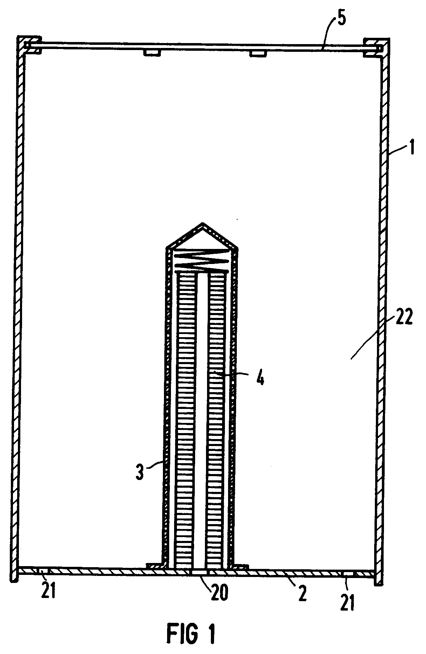

Gemäß Fig. 1 wird der Transportbehälter bevorzugt von einem Mantelblech 1 gebildet, auf dessen Boden 2 ein perforiertes Filtergehäuse 3 befestigt ist, in dem ein ungefähr zentral im austauschbaren Transportbehälter angeordnetes Filter 4 gehalten ist. Filtergehäuse und Filter weisen einen Absauganschluß 20 auf, um einen durch den das Filter umgebenden Ringraum 22 geleiteten Flüssigkeitsstrom, der mittels des Filters von mitgeführten Fremdstoffteilchen gereinigt wird, abzusaugen.

Dieser Flüssigkeitsstrom kann über entsprechende Öffnungen 21 im Boden 2 und/oder die obere Öffnung des Transportbehälters eintreten. An der oberen Öffnung ist eine Aufhängeeinrichtung 5 zum Anheben des Transportbehälters vorgesehen, wobei außerdem der obere Rand des Transportbehälters als Halterung und Dichtfläche ausgebildet sein kann, um den Transportbehälter an die untere Außlaßöffnung einer Zerkleinerungsvorrichtung anzuschließen.

Gemäß der Erfindung findet das Zerkleinern der Brennelement-Kästen, Spülen und Verpacken der entstehenden Schrott-Teile und das Sammeln der dabei abgespülten Fremdstoff-Teilchen gleichzeitig und praktisch an einem Ort, nämlich unter Wasser im Wasserbecken des Reaktors, also neben dem Einsatzort des Brennelementes statt. Lediglich das Einsetzen des bepackten Transportbehälters in den Endlagerbehälter und ggf. eine zwischengeschaltete Trocknung erfolgt anschließend und außerhalb des Wasserbeckens.

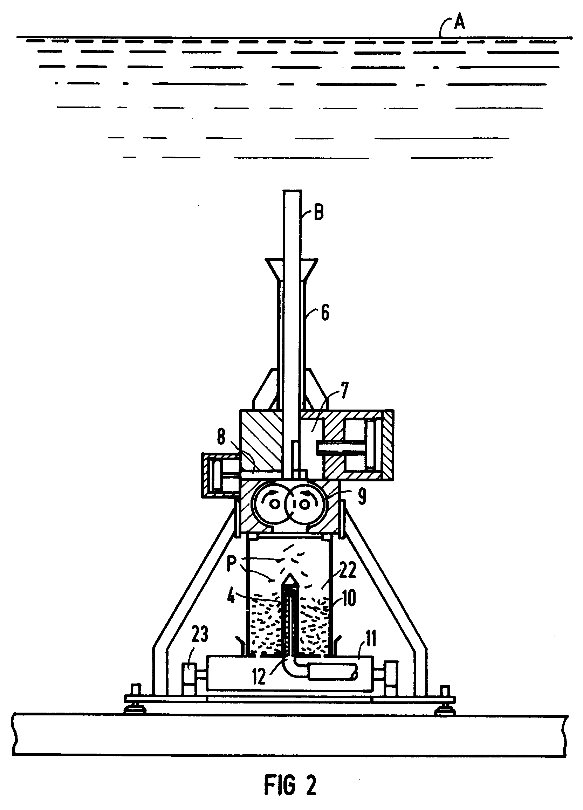

Eine in Fig. 2 gezeigte, vorteilhafte Zerkleingerungsvorrichtung weist einen Einführtrichter 6 für die verbrauchten Strukturelemente (z.B. den Brennelement-Kasten B), einen vorgeschalteten Preßstempel 7 einer Schrottpresse und ein nachfolgendes Schneidwerkzeug auf, das hier als Schredder mit einer Schere 8 und nachgeschalteten, gegenläufigen Schneidtrommeln 9 ausgebildet ist. Dadurch ist es möglich, den Schrott zu Teilen P mit einem maximalen Außenmaß zwischen z.B. 1 cm und 5 cm zu zerschneiden.

Diese Schrott-Größe ist so gewählt, daß die Schrott-Teile sich - ggf. unter Rütteln mittels eines Rüttelmotors 23 - beim Heraus fallen aus der Zerkleinerungsvorrichtung auf dem Boden des Ringraumes 22, der zwischen dem Mantelblech des Transportbehälters und dem im Zentrum des Behälters längs seiner zentralen Achse angeordneten Filter 4 von selbst in der gewünschten Packungsdichte aufschichten. Die Schrott-Teile sind also weder so klein und so leicht, daß sie von einem den Behälter 10 durchströmenden Flüssigkeitsstrom mitgerissen werden könnten, sie sind aber auch nicht so schwer und so groß, daß sie zu sperrig werden, um sich in der gewünschten Packungsdichte im Transportbehälter abzulagern.

Der Transportbehälter 10, der mit seinem oberen Rand an einer unten an der Zerkleinerungsvorrichtung vorgesehenen Dichtfläche angesetzt sein kann, ruht auf einem Wagen 11, mit dem er in der gezeigten Arbeitsstellung an der unteren Auslaßöffnung der Zerkleinerungsvorrichtung positioniert ist. Der Wagen 11 enthält einen Absauganschluß 12, der als Gegenstück zum Absauganschluß 20 des Filters 4 ausgebildet und an einen Flüssigkeitskreislauf mit einer eigenen, leistungsfähigen Pumpe angeschlossen ist. Die (nicht dargestellte) Leitung vom Absauganschluß 12 zu der Pumpe kann über das Filter der ohnehin vorgesehenen Beckenreinigung laufen und zurück in das Wasserbecken führen.

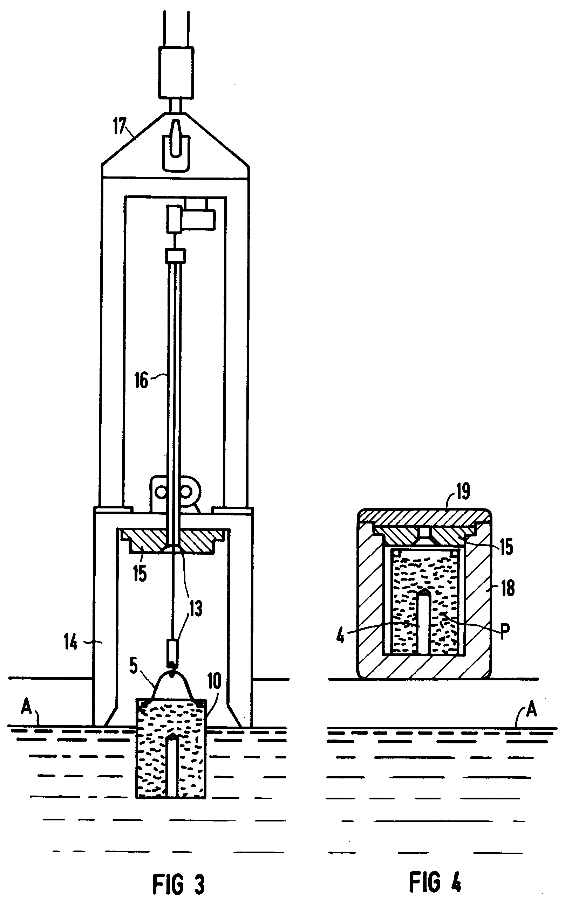

Sind also z.B. abgebrannte Brennelemente aus der Kernzone des Reaktors entnommen und von den gesondert zu entsorgenden Brennstäben befreit worden, so können die verbleibenden Strukturelemente über ein bewegliches Traggerüst unterhalb des Wasserspiegels A zu der in Fig. 2 gezeigten Zerkleinerungsvorrichtung gebracht und dort geschreddert werden. Bei diesem Vorgang lösen sich von der der Oberfläche des Schrotts Korrosionsteilchen und andere Fremdstoffe, die als Schwebstoffe von der durch den Transportbehälter strömenden Flüssigkeit mitgenommen und im Filter 4 gesammelt werden. Das dadurch beladene Filter 4 stellt somit eine stets stärker werdende Strahlungsquelle dar, die aber im zunehmenden Maße vom seitlich angesammelten Schrott abgeschirmt wird. Hat der Transportbehälter einen vorgegebenen Füllgrad erreicht, so wird er vom Wagen 11 aus der in Fig. 2 gezeigten Arbeitsposition heraus seitlich unter ein Transportmittel, zum Beispiel das Transportgerüst 17 der Fig. 3 verfahren. Dieses Transportgerüst trägt eine Hubvorrichtung mit einem eine Abschirmglocke 17 durchgreifenden Hubwerk 16, an dem vorteilhaft über eine Fernbedienung Anhängeeinrichtung 13 ein Transportdeckel 15 und der Transportbehälter 10 hängt. Mit der Angängeeinrichtung 13 wird der Transportbehälter 10 an seiner Aufhängeeinrichtung 5 ergriffen und in die Abdeckglocke gehoben, wo er mit dem Transportdeckel 15 verschlossen werden kann.

Über den am Boden des Transportbehälters angeordneten Absauganschluß 20 und ggf. den zusätzlichen Anschluß 21 kann das im Transportbehälter befindliche Beckenwasser ablaufen, sobald der Transportbehälter über dem Flüssigkeitsspiegel A hinausgehoben ist. Gegebenenfalls kann in dieser Stellung von Abschirmglocke und Transportbehälter auch noch eine weitere (z.B. chemische) Trocknung vorgenommen werden. Der trockene Behälter kann dann von dem beweglichen Traggerüst 17 zu einem Endlagerbehälter 18 (Fig. 4) verfahren und dort eingesetzt werden, wobei ein Endlagerbehälter-Deckel 19 aufgesetzt werden kann. Auf diese Weise entsteht ein Gebinde, in dessen Zentrum das mit radioaktiven Fremdstoffen beladene Filter 4 angeordnet ist, das von dem schwach strahlenden Schrott P bereits teilweise abgegeschirmt ist und nur noch verhältnismäßig schwach dimensionierte Abschirmwände 18 und Deckel 15, 19 für die Endlagerung erfordert und gefahrlos abtransportiert werden kann.

## Patentansprüche

1. Verfahren zum Zerkleinern und Verpacken verbrauchter Strukturelemente von Kernreaktoren, insbesondere verbrauchter Brennelement-Kästen (B), wobei die Strukturelemente zu Schrott-Teilen (P) zerkleinert, die Schrott-Teile (P) in einem Transportbehälter (10) gespült, abgespülte Fremdstoffteilchen (4) im Inneren des Transportbehälters (10) gesammelt und die Schrott-Teile (P) um die gesammelten Fremdstoffteilchen (4) herumgepackt werden und der bepackte Transportbehälter (10) in einen verschließbaren Lagerbehälter (18) eingesetzt wird.

2. Verfahren nach Anspruch 1, **dadurch gekennzeichnet,** daß die während des Zerkleinerns anfallenden Schrott-Teilchen (P) kontinuierlich in einen ein Filter (4) umgebenden Ringraum (22) im Transportbehälter (10) gefördert und von einem über das Filter (4) abgesaugten Flüssigkeitsstrom gespült werden, bis der Ringraum (22) praktisch mit Schrott (P) gefüllt ist, und daß der Transportbehälter (10) mit dem Filter und dem Schrott vor dem Einsetzen in den Lagerbehälter (18) getrocknet wird.

3. Verfahren nach Anspruch 1 oder 2, **dadurch gekennzeichnet,** daß die Strukturelemente (B) in einem Wasserbecken des Kernreaktors unter Wasser zerkleinert werden, die Schrott-Teile (P) in den Transportbehälter (10) fallen und mit Wasser des Wasserbeckens gespült werden.

4. Verfahren nach Anspruch 3, **dadurch gekennzeichnet,** daß das Wasser nach dem Spülen der Schrott-Teile (P) und dem Sammeln der Fremdstoffteilchen durch das Wasserbecken - vorteilhaft über ein Filter für das Wasser des Wasserbeckens - in den Transportbehälter (10) zurückgeleitet wird.

5. Verfahren nach Anspruch 3 oder 4, **dadurch gekennzeichnet,** daß der Transportbehälter (10) zum Trocknen aus dem Wasserbecken heraus unter eine Abschirmglocke (14) gehoben wird.

6. Verfahren nach Anspruch 5, **dadurch gekennzeichnet,** daß der Transportbehälter (10) außerhalb des Wasserbeckens mit einem Transportdeckel (15) abgedeckt und zusammen mit dem Transportdeckel in den Endlagerbehälter (18) eingesetzt wird.

7. Verfahren nach einem der Ansprüche 1 bis 6, **dadurch gekennzeichnet,** daß der Transportbehälter (10) beim Verpacken der Schrott-Teilchen (P) gerüttelt wird.

8. Verfahren nach einem der Ansprüche 1 bis 7, **dadurch gekennzeichnet,** daß die Strukturteile (B) zu Schrott-Teilen (P) einer der gewünschten Packungsdichte des Transportbehälters (10) angepaßten mittleren Größe zerkleinert werden.

9. Anlage zur Durchführung des Verfahrens nach einem der Ansprüche 1 bis 8, **gekennzeichnet durch** eine Zerkleinerungsvorrichtung (6, 7, 8, 9), einen unterhalb der Zerkleinerungsvorrichtung angeordneten, auswechselbaren Transportbehälter (10) mit einem zentralen Filter (4) und einem Anschluß (20, 21) an einen Flüssigkeitskreislauf, einen Wagen (11), um den Transportbehälter (10) seitlich gegenüber der Zerkleinerungsvorrichtung zu verschieben, eine Hubvorrichtung (13, 16) mit einer unten offenen Abschirmglocke (14) und ein Transportmittel (17) zum Transportieren des Transportbehälters (10) und dessen Einsetzen in einen Endlagerbehälter (18).

10. Anlage nach Anspruch 9, **dadurch gekennzeichnet,** daß der Wagen (11) einen Verbindungsschlauch zwischen einem Absauganschluß (20) am Filter (10) und einer Pumpe, vorteilhaft einer Pumpe mit einem vorgeschalteten Beckenwasser-Reinigungsfilter, trägt.

11. Anlage nach Anspruch 9 oder 10, **dadurch gekennzeichnet,** daß im Inneren der Abschirmglocke (14) ein von außen lösbarer Transportdeckel (15) aufgehängt ist.

12. Anlage nach einem der Ansprüche 9 bis 11, **dadurch gekennzeichnet,** daß als Transportmittel ein bewegliches Traggerüst (17) für die Hubvorrichtung mit einem durch die Abschirmglocke (14) hindurchgreifenden Hubwerk (16) und einer Anhängeeinrichtung (13) für den Transportbehälter (10) vorgesehen ist.

13. Anlage nach Anspruch 12, **dadurch gekennzeichnet,** daß die Anhängeeinrichtung (13) zum Befestigen des Transportbehälters (10) eine lösbare Halterung für den Transportdeckel (15) aufweist.

14. Zerkleinerungsvorrichtung und Wagen für eine Anlage nach Anspruch 9 oder 10, **gekennzeichnet durch** einen Einführtrichter (6) für die Strukturelemente, einen Preßstempel (7), ein nachfolgendes Schneidewerkzeug mit Werkzeugantrieb und einen Auslaß für Schrott-Teile an der Zerkleinerungsvorrichtung und Mitteln, einen Transportbehälter (10) zwischen dem Wagen (11) und der Zerkleinerungsvorrichtung zu positionieren und an einen Flüssigkeitskreislauf anzuschließen.

15. Zerkleinerungsvorrichtung und Wagen nach Anspruch 14, **gekennzeichnet durch** eine Dichtfläche am unteren Auslaß für den Schrott, an der der Transportbehälter (10) ansetzbar ist.

16. Zerkleinerungsvorrichtung und Wagen nach einem der Ansprüche 14 oder 15, **dadurch gekennzeichnet,** daß das Schneidwerkzeug einen Schredder mit einer Schere (8) und nachgeschalteten, gegenläufigen Schneidtrommeln (9) aufweist.

17. Auswechselbarer Transportbehälter für eine Anlage nach Anspruch 9, **dadurch gekennzeichnet,** daß innerhalb des Behälters (10) ein Filter (4) mit einem Absauganschluß (20) angeordnet ist.

18. Behälter nach Anspruch 17, **dadurch gekennzeichnet,** daß der Absauganschluß (20) und vorzugsweise eine weitere Anschlußöffnung (21) am Boden des Transportbehälters (10) angebracht sind.

19. Behälter nach einem der Ansprüche 17 oder 18, **gekennzeichnet durch** ein seitlich geschlossenes Mantelblech (1), einem oberen offenen Ende und einer Aufhängevorrichtung zum Anheben des Transportbehälters (10) am oberen, offenen Ende.

20. Behälter nach einem der Ansprüche 17 bis 19, **dadurch gekennzeichnet,** daß das Filter (4) im Zentrum des Transportbehälters (10) längs seiner zentralen Achse angeordnet ist.

21. Behälter nach einem der Ansprüche 17 bis 20, **dadurch gekennzeichnet,** daß das Filter (4) in einem perforierten Filtergehäuse gehalten ist.

22. Endlagerbehälter mit abschirmenden Außenwänden für eine Anlage nach einem der Ansprüche 9 bis 13, **dadurch gekennzeichnet,** daß die Wandstärke der Strahlenbelastung durch im Zentrum gelagerte, radioaktive Fremdstoffe angepaßt und entsprechend dem Volumen und der Packungsdichte der die Fremdstoffe umgebenden Schrott-Teile verringert ist.
